# EUROPEAN PATENT APPLICATION

(11) **EP 1 195 995 A2**
(43) Date of publication of application: **10.04.2002**
(21) Application number: 01305384.8
(22) Date of filing: 21.06.2001
(51) Int. Cl.: H04N 7/50

(54) **Recompression of data in memory**

(30) Priority: 03.10.2000 GB 0024114
(71) Applicant: Pace Micro Technology PLC, Saltaire, Shipley, BD18 3LF (GB)
(72) Inventor: Frost, Jonathan Andrew, Thackley, Bradford, B10 8WH (GB); Garett, Peter, Baildon, Shipley, BD17 5PY (GB); Rowe, James, Shipley, Bradford BD18 4HY (GB)
(74) Representative: Wood, Graham

(57) **Abstract**

A method and system is provided for controlling the storage of data. The data is broadcast to and received by a broadcast data receiver and the receiver is provided with or connected to memory in which the data, including video data is to be stored. At an instant decided by any or any combination of control parameters, a portion of the data held in the memory is selected, compressed/recompressed and stored in the memory in the compressed condition.

## Description

The invention which is the subject of this application relates to the storage of data and the use of the same in conjunction with a memory in the form of a Random Access Memory, such as a Hard Disk Drive (HDD). The aim of the invention is to allow the recompression of data relating, for example, to video and audio for a television programme on a personal video recorder (PVR) to increase the storage capacity for recordings/content.

Typically the storage which is available on a HDD-based PVR system is limited and even as larger-capacity HDDs arrive, new formats will require more storage capacity and broadcasters/advertisers will request more content storage capacity. The provision of the HDD as part of a broadcast data receiver is now a conventional approach and allows the storing of data received at the broadcast data receiver rather than or in addition to, the display of the video and audio data in the form of a television programme via a display screen connected to the receiver. As the data is received, the broadcast data receiver can be controlled and instructed to pass the data for storage in the HDD memory whereupon it can be identified as relating to a particular programme and subsequently retrieved upon user demand for display at a later date. However, at times the amount of data held in the HDD can build up to such an extent that the storage space available runs out. This can mean that unless the user has previously decided to delete old stored data, new data cannot be stored due to insufficient storage space. At present data is compressed when it is stored in the HDD but even this is found to be insufficient in making sufficient space available.

The aim of the present invention is to provide a means whereby the storage space available in the memory can be maximised to allow data to be stored therein as and when required.

In a first aspect of the invention there is provided a method of controlling the storage of data in an electronic device, said data received by said device and said device provided with or connected to memory in which the data is to be stored, characterised in that at an instant decided by any or any combination of control parameters, a portion of said data held in the memory is selected, compressed and stored in the memory in the compressed condition.

Preferably the combination of control parameters includes at least time and/or current storage space available in the memory.

Preferably the electronic device is any of a broadcast data receiver, personal video recorder (PVR) or DVD player.

Preferably the memory is the HDD of the broadcast data receiver, PVR or DVD player.

Typically, when the data is first stored in the HDD, it is stored in a compressed form to allow the quality of the data, when it is subsequently selected to generate a video display, to be as near as possible to the quality of display which would be achieved at the original scheduled time of display. In accordance with the present invention, at a time after the initial storage of the data in the HDD, portions of data are selected and then compressed again, thereby reducing the storage space taken up by that portion of data. This frees up storage space in the HDD, which then becomes available for the subsequent storage of newly received data as and when required.

The further compression of the data does mean that the data is provided in a reduced bit rate which, in turn, means that the quality of the video display subsequently generated therefrom is reduced. However the method does provide a viable and useful alternative to the deletion of data to make new storage space available in the HDD/memory.

Preferably selected programmes recorded on a PVR/broadcast data receiver/DVD player will be recompressed during times when the device is not performing any other function or primary operational function. These selected programmes can be recompressed at a lower bit rate than when originally recorded, thereby freeing up some storage space in the device.

Preferably the data compressed is in the form of one or more programmes and reference to programmes in the following description refers to all manner of films, television programmes and/or the like, particularly including video data, that can be stored into memory on a PVR/broadcast data receiver/ DVD player and/or the like.

According to a second aspect of the present invention there is provided a method of controlling the storage of data, said data broadcast to and received by a broadcast data receiver, said receiver provided with or connected to memory in which data, including video data, is to be stored, characterised in that at an instant decided by any or any combination of control parameters, a portion of said data held in the memory is selected, compressed and stored in the compressed condition.

According to a further aspect of the present invention there is provided a television system including a broadcast data receiver (BDR), said BDR receiving data in the form of video, audio and/or auxiliary data broadcast from a remote location, said BDR provided with or connected to memory in which the data is to be stored, and characterised in that the BDR is provided with processing means which provide, at an instant decided by any or any combination of control parameters, a portion of said data held in the memory to be selected, compressed and stored in the memory in the compressed condition.

Thus the present invention provides a means of recompression of data, the recompression taking place at a time subsequent to the compression of data originally recorded.

A specific embodiment of the invention is now described with reference to a broadcast data receiver with a storage means/memory in the form of an HDD/RAM in which, portions of data, typically defining a television programme can be selectively stored. The broadcast data receiver typically forms part of a television system.

In accordance with the present invention, when the HDD is nearing full capacity, the receiver will inform the user of this and request the user to select one or more stored programmes from the HDD that they wish to compress or delete. In one embodiment the receiver may suggest one or more programmes to the user for compression or deletion and these suggested programmes are typically the oldest programmes stored on the HDD.

In a preferred embodiment the receiver can be configured to autonomously select programmes for compression, thereby making the whole process invisible to the user and maximising the available processing time of the receiver.

Broadcast Data receivers typically have extended periods of free processor time when the receiver is not performing a primary operational functions or is idle. For example, when the user is watching a single channel/recording, or the receiver is in standby. In these periods of free processor time, the receiver software can compress selected programmes at a lower bit rate and, although the subsequent data stored is of a lower quality, it will be no worse than 200-line VHS quality which has conventionally been used for years.

The further compression can be performed using the receiver software or hardware: Compression using the receiver software is likely to be slower but processors are becoming more powerful and use of the software will become an increasingly viable option. The free space gained in the HDD can be accumulated by defragmenting the HDD storage capacity, or alternatively, a programme file storage system can be adapted to manage the capacity.

The result of this invention is that users are able to keep programmes for longer, even if they do deteriorate to an extent in terms of quality when subsequently displayed. In addition, there is more storage for programmes/broadcaster content.

Further compression of data after compression of the original recording of data on the HDD is potentially very effective because most broadcast channels are real-time compressed, which does not give as good results as non-real-time compression, such as that used in DVD players. Even statistical multiplexers (e.g. Reflex) do not react quickly, meaning that there is still some redundancy in the data. Significant amounts of disk storage space can be made available quickly using a customised compression algorithm, suited to the application of television programme data, such as compress the start and end credits of a program first because this is likely to be highly compressible and is less noticeable to the user. Extra service information in the data streams recorded on the HDD can provide pointers to the receiver for the best places in the data to compress first. Alternatively the bitrate of the recorded data stream can be analysed to find where the latency of the statistical multiplexer can cause most data redundancy. The compression can be done in stages, so the oldest programmes are gradually compressed more and more.

This therefore means that the data held in a memory/storage space can continue to be stored therein but in an increasingly compressed format over time. The data need not be discarded to free storage space as is conventionally the case and the user can therefore still have access to view material which has been previously stored. The quality of the data when subsequently processed for viewing of video may deteriorate but it is still available for viewing, which was not the case with conventional data memory management methods, and this benefit far outweighs any reduced quality in the video display generated from the data.

## Claims

1. A method of controlling the storage of data in an electronic device, said data received by said device and said device provided with or connected to memory in which the data is to be stored, **characterised in that** at an instant decided by any, or any combination of control parameters, a portion of said data held in the memory is selected, compressed and stored in the memory in the compressed condition.

2. A method according to claim 1 **characterised in that** the data selected for compression at said instant is in addition to any compression of the data when originally recorded in said memory.

3. A method according to claim 1 **characterised in that** the instant when a portion of said data is selected for compression is determined by the parameter of a period of time after the initial storage of the data.

4. A method according to claim 1 **characterised in that** the parameter for selecting to compress the data is the available capacity of the memory at that instant.

5. A method according to claim 1 **characterised in that** compression of the data takes place during times when the device is not performing any other function or primary operational function.

6. A method according to claim 1 **characterised in that** when the memory is nearing full capacity or is at a predetermined capacity, the device initiates a request to the user to select one or more stored programmes from the memory for compression or deletion.

7. A method according to claim 6 **characterised in that** the device suggests to the user one or more programmes stored in the memory for compression.

8. A method according to claim 7 **characterised in that** the suggested one or more programmes include the oldest programmes stored in the memory.

9. A method according to claim 1 **characterised in that** the device autonomously makes the selection of one or more programmes stored in the memory for compression.

10. A method according to claim 1 **characterised in that** the free storage space gained in the memory by recompression of data therein is accumulated by defragmenting the memory storage capacity.

11. A method according to claim 1 **characterised in that** the free storage spaced gained in the memory by recompression of data is accumulated by using a programme file storage system.

12. A method according to claim 1 **characterised in that** the data compressed is a portion of at least one pre recorded television programme.

13. A method according to claim 1 **characterised in that** the electronic device is any of a personal video recorder, broadcast data receiver or DVD player.

14. A method of controlling the storage of data in a broadcast data receiver, said data broadcast to and received by said receiver, said receiver provided with or connected to memory in which the data, including video data is to be stored, **characterised in that** at an instant decided by any, or any combination of control parameters, a portion of said data held in the memory is selected, compressed and stored in the memory in the compressed condition.

15. A television system including a broadcast data receiver (BDR), said BDR receiving data in the form of video, audio and/or auxiliary data broadcast from a remote location, said BDR provided with or connected to memory in which the data is to be stored, and **characterised in that** the BDR is provided with processing means which provide, at an instant decided by any or any combination of control parameters, a portion of said data held in the memory to be selected, compressed and stored in the memory in the compressed condition.
